# EUROPEAN PATENT APPLICATION

(11) **EP 2 559 919 A1**
(43) Date of publication of application: **20.02.2013**
(21) Application number: 12158076.5
(22) Date of filing: 05.03.2012
(51) Int. Cl.: F16H 59/10

(54) **Shifter assembly for a vehicle**

(71) Applicant: Kongsberg Driveline Systems Sas, 74302 Cluses, Haute-Savoie (FR)
(72) Inventor: Salle, Frédérik, 74490 Megevette, Haute-Savoie (FR)
(74) Representative: UEXKÜLL & STOLBERG

(57) **Abstract**

A shifter assembly (10) for a vehicle and a method of assembling a shifter is disclosed. The shifter assembly (10) includes a housing (12) defining an aperture (14) with the aperture (14) defining a pivot axis (P). The shifter assembly (10) further includes a lever (30) coupled to the housing (12). The lever (30) defines an opening (32) with the opening (32) defining a central axis (C) spaced from the pivot axis (P). The shifter assembly (10) also includes a pin (46) selectively disposed in the aperture (14) of the housing (12) and the opening (32) of the lever (30) for coupling the lever (30) to the housing (12). The pin (46) defines a pin axis (A). The shifter assembly (10) also includes an eccentric portion (48) attached to the pin (46) and disposed in the opening (32). The eccentric portion (48) defines an eccentric axis (E) coaxial with the central axis (C) and offset from the pin axis (A) to define a first pivot ratio for the lever (30).

## Description

### BACKGROUND OF THE INVENTION

### 1. Field of the Invention

The present invention relates to a shifter assembly for a vehicle.

### 2. Description of the Related Art

Various shift devices are known in the art for selecting a gear in a transmission of a vehicle. One type of shift device is disclosed in U.S. Patent No. 5,836,209 which includes a base and a shift lever assembly pivotally mounted on the base by a separate pivot member. The pivot member includes a reduced diameter portion and an intermediate portion including a flat corresponding to the flat of the shift lever assembly. The pivot member also includes another end having two diameter sections greater than the diameters of the reduced diameter portion and the intermediate portion. One of the diameter sections also includes a flat. Thus the pivot member is keyed to the shift lever assembly to pivot together. However, this reference fails to disclose any device to accommodate different pivot ratios for the shift lever assembly.

Therefore, there remains an opportunity to develop a shifter assembly that accommodates different pivot ratios and increases modularity.

### SUMMARY OF THE INVENTION

The present invention provides for a shifter assembly for a vehicle. The shifter assembly includes a housing defining an aperture with the aperture defining a pivot axis. The shifter assembly further includes a lever coupled to the housing. The lever defines an opening with the opening defining a central axis spaced from the pivot axis. The shifter assembly also includes a pin selectively disposed in the aperture of the housing and the opening of the lever for coupling the lever to the housing. The pin defines a pin axis. The shifter assembly also includes an eccentric portion attached to the pin and disposed in the opening. The eccentric portion defines an eccentric axis coaxial with the central axis and offset from the pin axis to define a first pivot ratio for the lever.

Therefore, the eccentric portion accommodates the first pivot ratio for the lever and additionally, the eccentric portion can accommodate a second pivot ratio. Hence, different levers can be utilized with the eccentric portion such that the eccentric portion can accommodate different pivot ratios for the levers. As such, the eccentric portion increases modularity of the pin and thus the shifter assembly.

### BRIEF DESCRIPTION OF THE DRAWINGS

Advantages of the present invention will be readily appreciated, as the same becomes better understood by reference to the following detailed description, when considered in connection with the accompanying drawings.

Figure 1 is a perspective view of the shifter assembly with a pin in a first position.

Figure 2 is a broken-perspective view of a housing with a first lever coupled to the housing and the pin spaced from the lever.

Figure 3 is a fragmented exploded view of the pin in the first position and the first lever in a first pivot ratio.

Figure 4 is an end view of the pin.

Figure 5 is a fragmented exploded view of the pin in a second position and a second lever in a second pivot ratio.

Figure 6 is a side view of the first lever.

Figure 7 is a side view of the second lever.

### DETAILED DESCRIPTION OF THE INVENTION

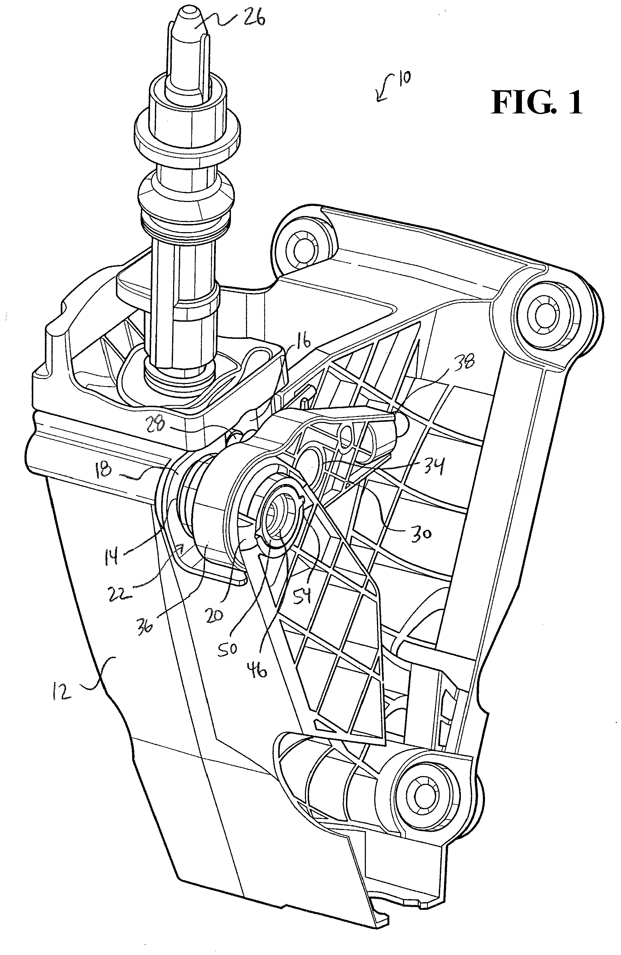

Referring to the Figures, wherein like numerals indicate like or corresponding parts throughout the several views, a shifter assembly 10 for a vehicle (not shown) is generally shown in Figure 1. Generally, the shifter assembly 10 is utilized to select or change one of a plurality of gears of a transmission of the vehicle. As such, it is to be appreciated that the shifter assembly 10 can be utilized with a manual transmission or an automatic transmission. For example, the gears can be defined as one or more of the following positions: first gear, second gear, third gear, fourth gear, reverse, and neutral. It is to be appreciated that other positions of the gears can be utilized, such as: park, drive, low, high, overdrive, and/or any other suitable position(s). It is to further be appreciated that when utilizing the manual transmission, the shifter assembly 10 can be operable in a double H-pattern or any other suitable pattern.

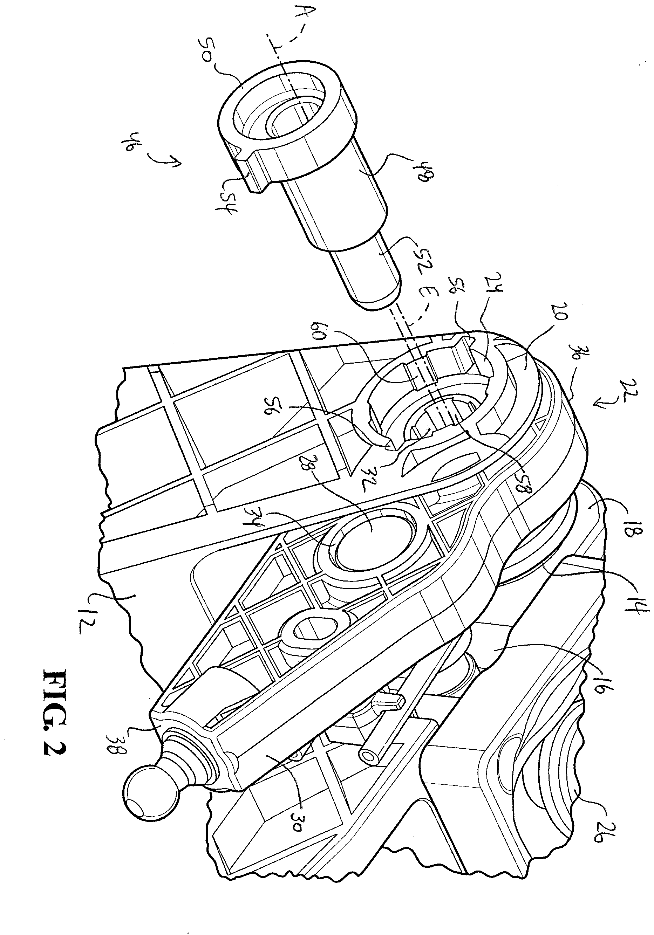

Referring to Figures 1 and 2, the shifter assembly 10 includes a housing 12 defining an aperture 14 with the aperture 14 defining a pivot axis P. The housing 12 also defines a slot 16 spaced from the aperture 14, and therefore, the slot 16 is spaced from the pivot axis P. Generally, the slot 16 is elongated. However, it is to be appreciated that the slot 16 can be any suitable configuration.

In certain embodiments, the housing 12 includes a first wall 18 and a second wall 20 spaced from each other to define a channel 22 therebetween. Generally, the first and second walls 18, 20 extend transverse to the pivot axis P. The aperture 14 of the housing 12 is further defined as a first aperture 14 and the first wall 18 further defines the first aperture 14 and the second wall 20 defines a second aperture 24 along the pivot axis P. Therefore, the first and second apertures 14, 24 align with each other, and more specifically, align with each other along the pivot axis P. The aperture 14 will be referred to as the first aperture 14 for the below discussion. It is to be appreciated that the first wall 18 can further define the slot 16 spaced from the first aperture 14.

The shifter assembly 10 can further include a shifter 26 movably coupled to the housing 12. The shifter 26 is movable to a desired position to select the desired gear, such as first gear, second gear, reverse, etc. For example, when utilizing the double H-pattern, the shifter 26 can move back and forth in a shift direction, as well as, left and right in a select direction.

The shifter assembly 10 can also include a stud 28 extending through the slot 16 of the housing 12. The stud 28 is coupled to the shifter 26 and is movable relative to the housing 12 in the slot 16. More specifically, the stud 28 is coupled to the shifter 26 to concurrently move with the shifter 26. Therefore, when the shifter 26 moves to a desired position, the stud 28 moves, and other components are also actuated (some of which are discussed below) to select the desired gear, such as first gear, second gear, reverse, etc.

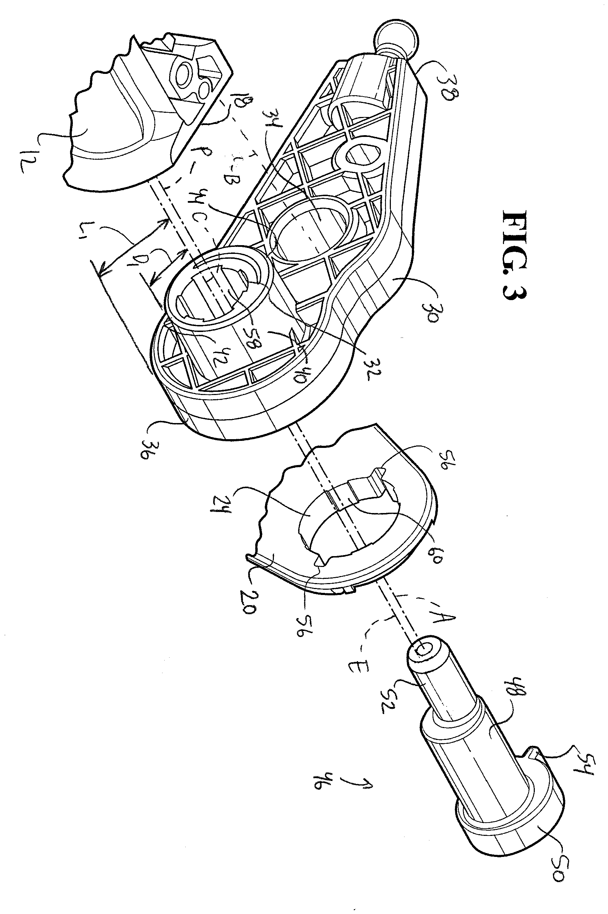

Also referring to Figure 3, the shifter assembly 10 further includes a lever 30 coupled to the housing 12. The lever 30 defines an opening 32 with the opening 32 defining a central axis C spaced from the pivot axis P. The lever 30 further defines a hole 34 spaced from the opening 32 with the slot 16 aligning with the hole 34 of the lever 30. The hole 34 defines an auxiliary axis B spaced from the central axis C. The stud 28 is disposed in the hole 34 of the lever 30 for moving the lever 30 between a first gear position and a second gear position different from the first gear position. When the shifter 26 moves left and right in the select direction, the stud 28 correspondingly moves through the slot 16 of the housing 12 such that the stud 28 moves the lever 30. Therefore, movement of the shifter 26 corresponds to movement of the lever 30 between the first and second gear positions to select the desired gear, such as first gear, second gear, reverse, etc. Furthermore, the stud 28 is rotatable in the hole 34 of the lever 30 when the shifter 26 moves back and forth in the shift direction such that the lever 30 remains stationary.

In certain embodiments, the channel 22 between the first and second walls 18, 20 receives the lever 30. In other words, the lever 30 is disposed in the channel 22 between the first and second walls 18, 20. Generally, the lever 30 includes a first end 36 and a second end 38 spaced from each other transverse to the central axis C. The hole 34 is disposed between the first and second ends 36, 38 of the lever 30. Further, the lever 30 is coupled to the housing 12 adjacent the first end 36. More specifically, the lever 30 is coupled to the first and second walls 18, 20 adjacent the first end 36. It is to be appreciated that the lever 30 can be coupled to the housing 12 at any suitable location.

A cable (not shown) is coupled to the second end 38 of the lever 30. More specifically, one end of the cable is coupled to the second end 38 of the lever 30 and another end of the cable is coupled to the transmission. Therefore, movement of the lever 30 causes the cable to move for selecting or changing the gears of the transmission. In other words, when the lever 30 moves to one of the first and second gear positions, the cable correspondingly moves which communicates with the transmission to select the desired gear of the transmission, such as first gear, second gear, reverse, etc.

In certain embodiments, the lever 30 includes a protrusion 40 disposed in the first aperture 14 of the housing 12 and extends outwardly along the central axis C. Generally, the protrusion 40 defines an outer diameter cooperating with an inner diameter of the first aperture 14 of the housing 12 for securing the lever 30 to the housing 12. Further, the opening 32 extends through the protrusion 40 with the protrusion 40 spaced from the hole 34 of the lever 30. In addition, the protrusion 40 is disposed between the first and second ends 36, 38 of the lever 30. More specifically, the protrusion 40 is disposed between the hole 34 and the first end 36 of the lever 30. Therefore, the hole 34 is disposed between the protrusion 40 and the second end 38 of the lever 30. It is to be appreciated that the hole 34 and the protrusion 40 can be at any suitable location.

The protrusion 40 includes a first distal end 42 and a second distal end 44 transverse to the central axis C with the central axis C of the opening 32 spaced one of a first distance D₁ from the first distal end 42 and a second distance D₂ from the first distal end 42 with the second distance D₂ being greater than the first distance D₁. As such, the location of the opening 32 can change between the first and second distal ends 36, 44 of the protrusion 40. The first distal end 42 of the protrusion 40 faces the first end 36 of the lever 30 and the second distal end 44 of the protrusion 40 faces the second end 38 of the lever 30. More specifically, the first distal end 42 is adjacent the first end 36 of the lever 30. Therefore, the opening 32 is proximal to the first distal end 42 when the opening 32 is spaced the first distance D₁ from the first distal end 42 and the opening 32 is proximal to the second distal end 44 when the opening 32 is spaced the second distance D₂ from the first distal end 42. Hence, when the opening 32 is proximal to the first distal end 42 of the protrusion 40, the central axis C of the opening 32 is spaced a first length L₁ from the first end 36 of the lever 30 and when the opening 32 is proximal to the second distal end 44 of the protrusion 40, the central axis C of the opening 32 is spaced a second length L₂ from the first end 36 of the lever 30. The second length L₂ is greater than the first length L₁. Figure 3 illustrates the central axis C of the opening 32 spaced the first distance D₁ from the first distal end 42 of the protrusion 40 and the central axis C of the opening 32 spaced the first length L₁ from the first end 36 of the lever 30.

The shifter assembly 10 also includes a pin 46 selectively disposed in the first aperture 14 of the housing 12 and the opening 32 of the lever 30 for coupling the lever 30 to the housing 12. More specifically, the pin 46 is disposed in the first and second apertures 14, 24 and the opening 32. In other words, the pin 46 is disposed in the first aperture 14 of the first wall 18, the opening 32 of the lever 30, and the second aperture 24 of the second wall 20 for coupling the lever 30 to the housing 12. When the lever 30 moves to one of the first and second gear positions, the lever 30 rotates about the pin 46, and more specifically, rotates about the central axis C.

The pin 46 defines a pin axis A with the pin 46 being rotatable about the pin axis A between a first position and a second position different from the first position. In other words, the first and second positions are different from each other. In certain embodiments, the pin axis A and the pivot axis P are coaxial. Further, in certain embodiments, the pin axis A is spaced from said central axis C.

The shifter assembly 10 further includes an eccentric portion 48 attached to the pin 46 and disposed in the opening 32. The eccentric portion 48 defines an eccentric axis E coaxial with the central axis C. The eccentric portion 48 is offset from the pin axis A to define a first pivot ratio for the lever 30. Hence, the eccentric axis E is spaced from the pin axis A.

The pin 46 is rotatable about the pin axis A to the first position with the eccentric portion 48 engaging the opening 32 of the lever 30 to correspond to a first orientation of the lever 30. The pin 46 is also rotatable about the pin axis A to the second position with the eccentric portion 48 engaging the opening 32 of the lever 30 to correspond to a second orientation of the lever 30. Hence, the first orientation of the lever 30 is different from the second orientation of the lever 30. For example, if desired to change the orientation of the lever 30, rotating the pin 46 from the first position to the second position can move the lever 30 back or forth. It is to be appreciated that rotating the pin 46 from the first position to the second position can change the orientation of the lever 30 up or down, etc. It is to be appreciated that rotating the pin 46 between the first and second positions can change the orientation of the lever 30 in any suitable position.

The pin 46 includes a head 50 and a shaft 52 spaced from each other along the pin axis A. The shaft 52 supports the pin 46 at the first wall 18 of the housing 12 and the head 50 supports the pin 46 at the second wall 20 of the housing 12. The eccentric portion 48 is disposed between the head 50 and the shaft 52. In certain embodiments, the eccentric portion 48 is attached to the head 50 and the shaft 52. In other embodiments, the head 50 and the shaft 52 are integrally formed with the eccentric portion 48. Therefore, when rotating the pin 46 between the first and second positions, the head 50, the shaft 52, and the eccentric portion 48 concurrently rotate therewith. Further, in various embodiments, the shaft 52 and the head 50 can each be aligned with the pin axis A. It is to be appreciated that the shaft 52 or the head 50 can be offset from the pin axis A.

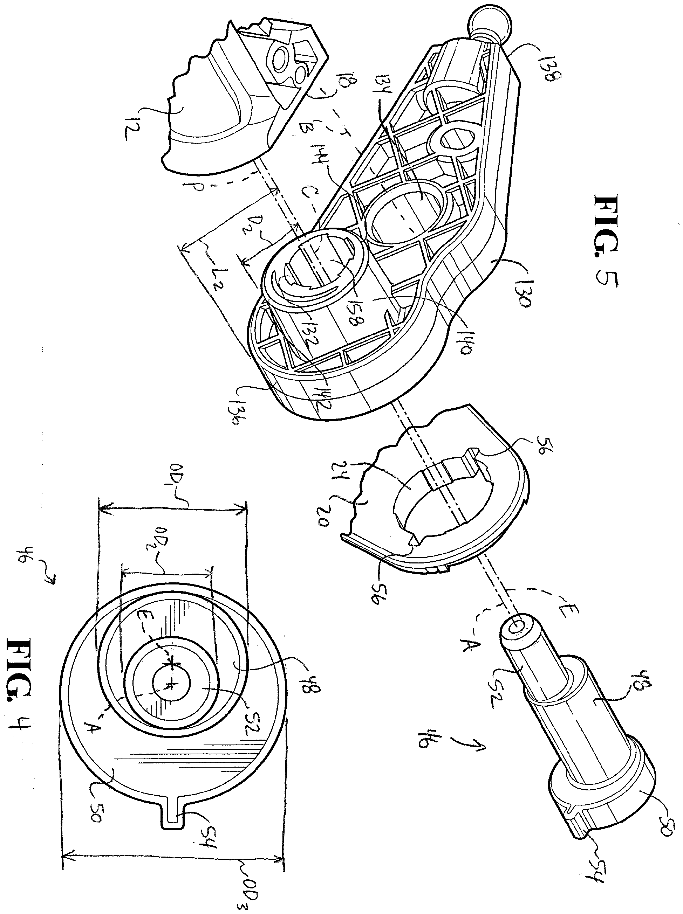

As best shown in Figure 4, the eccentric portion 48 defines a generally circular configuration having a first outer diameter OD₁. The shaft 52 defines a generally circular configuration having a second outer diameter OD₂ less than the first outer diameter OD₁. Further, the head 50 defines a generally circular configuration having a third outer diameter OD₃ greater than the first and second outer diameters OD₁, OD₂. As such, the eccentric portion 48 is complementary to an inner diameter of the opening 32 of the lever 30 and the head 50 is complementary to an inner diameter of the second aperture 24 of the second wall 20. It is to be appreciated that the eccentric portion 48, the shaft 52, and/or the head 50 can be other configurations.

Referring to Figures 2 and 3, in certain embodiments, the pin 46 includes a tab 54, and more specifically, the head 50 of the pin 46 includes the tab 54 engaging the housing 12 for securing the pin 46 in one of the first and second positions. Specifically, the housing 12 defines a plurality of recesses 56 spaced from each other adjacent the first aperture 14 with the tab 54 selectively engaging one of the recesses 56 for securing the pin 46 in one of the first and second positions. In various embodiments, the second wall 20 of the housing 12 further defines the recesses 56 spaced from each other adjacent the second aperture 24 with the tab 54 selectively engaging one of the recesses 56 for securing the pin 46 in one of the first and second positions. Therefore, the tab 54 is disposed in one of the recesses 56 of the second wall 20 and the head 50 of the pin 46 is disposed in the second aperture 24 of the second wall 20. It is to be appreciated that the tab 54 can be disposed in one of the recesses 56 without the head 50 being disposed in the second aperture 24.

The lever 30 optionally defines a plurality of grooves 58 spaced from each other radially relative to the central axis C. The grooves 58 of the lever 30 cooperate with the opening 32 of the lever 30 for reducing surface area engagement between the lever 30 and the eccentric portion 48. In certain embodiments, the grooves 58 are disposed adjacent the opening 32.

In addition, the housing 12, and more specifically, the second wall 20 optionally includes a plurality of lips 60 spaced from each other radially relative to the pivot axis P. The lips 60 cooperate with the pin 46 and more specifically, cooperate with the second aperture 24 of the second wall 20 for engaging the pin 46 when the pin 46 is coupling the lever 30 to the housing 12. More specifically, the head 50 of the pin 46 engages the lips 60 for securing the pin 46 to the second wall 20. In certain embodiments, the lips 60 are disposed adjacent the second aperture 24. It is to be appreciated that the lips 60 can be disposed adjacent the first aperture 14 or any suitable location.

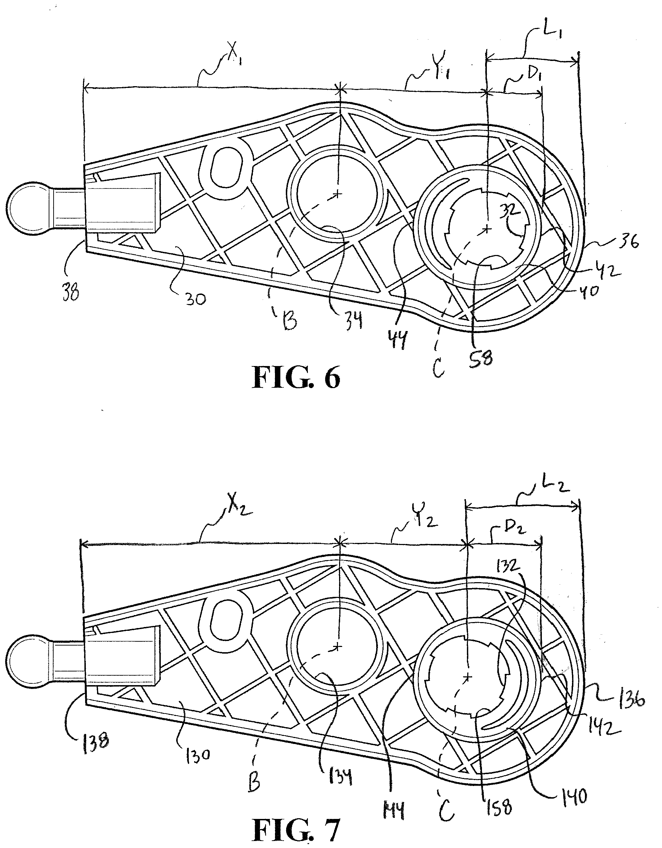

The lever 30 is further defined as a first lever 30 defining the first opening 32 for receiving the pin 46 in the first position with the eccentric portion 48 engaging the first opening 32 of the first lever 30 in a first orientation further defining the first pivot ratio. In certain embodiments, the first opening 32 of the first lever 30 is spaced the first distance D₁ from the first distal end 42 for receiving the pin 46 in the first position. In other embodiments, the first opening 32 of the first lever 30 is spaced the second distance D₂ from the first distal end 42 for receiving the pin 46 in the second position. The first lever 30 is shown in Figures 1-3 and 6. Figures 3 and 6 illustrate the central axis C of the first opening 32 spaced the first distance D₁ from the first distal end 42 of the first protrusion 40 and the central axis C of the first opening 32 spaced the first length L₁ from the first end 36 of the first lever 30.

Referring to Figures 5 and 7, the shifter assembly 10 can include a second lever 130. Only one of the first and second levers 30, 130 is coupled to the housing 12 at any time. In other words, when the first lever 30 is coupled to the housing 12, the second lever 130 is not coupled to the housing 12, and vise versa. Generally, the first and second levers 30, 130 have similarities, and therefore, similar features of the second lever 130 will only be briefly discussed below. Therefore, reference numerals for similar or identical features for the second lever 130 are increased by 100.

For example, the second lever 130 defines a second opening 132 for receiving the pin 46. The second opening 132 of the second lever 130 defines a central axis C spaced from the pivot axis P and defines a second hole 134 spaced from the second opening 132 with the slot 16 aligning with the second hole 134 of the second lever 130. The second hole 134 defines an auxiliary axis B spaced from the central axis C. The eccentric axis E is coaxial with the central axis C of the second opening 132 and the eccentric portion 48 is offset from the pin axis A. Hence, the eccentric axis E is spaced from the pin axis A. Further, the central axis C of the second opening 132 is spaced from the pivot axis P.

The second lever 130 includes a second protrusion 140 disposed in the first aperture 14 of the housing 12 and extending outwardly along the central axis C. The second lever 130 includes a first end 136 and a second end 138 spaced from each other transverse to the central axis C with the second hole 134 and the second protrusion 140 disposed between the first and second ends 136, 138. The second protrusion 140 includes a first distal end 142 and a second distal end 144 transverse to the central axis C with the central axis C of the second opening 132 spaced one of a first distance D₁ from the first distal end 142 and a second distance D₂ from the first distal end 142 with the second distance D₂ being greater than the first distance D₁. Therefore, in certain embodiments, the second opening 132 of the second lever 130 is spaced the first distance D₁ from the first distal end 142 of the second protrusion 140 for receiving the pin 46 in the first position. In other embodiments, the second opening 132 of the second lever 130 is spaced the second distance D₂ from the first distal end 142 of the second protrusion 140 for receiving the pin 46 in the second position.

When the second opening 132 is proximal to the first distal end 142 of the second protrusion 140, the central axis C of the second opening 132 is spaced a first length L₁ from the first end 136 of the second lever 130 and when the second opening 132 is proximal to the second distal end 144 of the second protrusion 140, the central axis C of the second opening 132 is spaced a second length L₂ from the first end 136 of the second lever 130. The second length L₂ is greater than the first length L₁. Figures 5 and 7 illustrate the central axis C of the second opening 132 spaced the second distance D₂ from the first distal end 142 of the second protrusion 140 and the central axis C of the second opening 132 spaced the second length L₂ from the first end 136 of the second lever 130.

The primary distinction between the first and second levers 30, 130 is the orientation of the first and second openings 32, 132. Therefore, the second opening 132 receives the pin 46 in the second position with the eccentric portion 48 engaging the second opening 132 of the second lever 130 in a second orientation defining a second pivot ratio. The first and second pivot ratios are different from each other for allowing the pin 46 to interchangeably couple one of the first and second levers 30, 130 to the housing 12. Generally, the first opening 32 of the first lever 30 is orientated differently from the second opening 132 of the second lever 130. Therefore, if the first opening 32 is spaced the first distance D₁ from the first distal end 42 of the first protrusion 40 of the first lever 30, the second opening 132 is spaced the second distance D₂ from the first distal end 142 of the second protrusion 140 of the second lever 130. Likewise, if the first opening 32 is spaced the second distance D₂ from the first distal end 42 of the first protrusion 40 of the first lever 30, the second opening 132 is spaced the first distance D₁ from the first distal end 142 of the second protrusion 140 of the second lever 130. Hence, as shown in Figure 3, the first opening 32 of the first lever 30 is spaced the first distance D₁ from the first distal end 42 of the first protrusion 40 for receiving the pin 46 in the first position; and therefore, the second opening 132 of the second lever 130 is spaced the second distance D₂ from the first distal end 142 of the second protrusion 140 for receiving the pin 46 in the second position, as shown in Figure 5.

Also referring to Figures 6 and 7, the first hole 34 and the second end 38 of the first lever 30 maintain a first length X₁ from each other. Specifically, the auxiliary axis B of the first hole 34 is spaced from the second end 38 the first length X₁. The location of the first hole 34 and the second end 38 of the first lever 30 remains the same even if the location of the first opening 32 of the first lever 30 changes. Furthermore, the first hole 34 and the first opening 32 of the first lever 30 are spaced from each other a first distance Y₁. Specifically, the auxiliary axis B of the first hole 34 and the center axis C of the first opening 32 are spaced from each other the first distance Y₁. Depending on the location of the first opening 32 of the first lever 30, the first distance Y₁ will change but the first length X₁ will remain the same. Hence, the location that the cable attaches to the second end 38 of the first lever 30 remains the same. Similarly, the location that the stud 28 engages the first hole 34 of the first lever 30 remains the same.

Additionally, the second hole 134 and the second end 138 of the second lever 130 maintain a second length X₂ from each other. Specifically, the auxiliary axis B of the second hole 134 is spaced from the second end 138 the second length X₂. The location of the second hole 134 and the second end 138 of the second lever 130 remains the same even if the location of the second opening 132 of the second lever 130 changes. Generally, the first length X₁ of the first lever 30 equals the second length X₂ of the second lever 130. It is to be appreciated that the first and second lengths X₁, X₂ can be any suitable lengths.

Furthermore, the second hole 134 and the second opening 132 of the second lever 130 are spaced from each other a second distance Y₂. Generally, the first distance Y₁ of the first lever 30 is greater than the second distance Y₂ of the second lever 130. Specifically, the auxiliary axis B of the second hole 134 and the center axis C of the second opening 132 are spaced from each other the second distance Y₂. It is to be appreciated that the first and second distances Y₁, Y₂ can be any suitable distances. Depending on the location of the second opening 132, the second distance Y₂ will change but the second length X₂ will remain the same. Hence, the location that the cable attaches to the second end 138 of the second lever 130 remains the same. Similarly, the location that the stud 28 engages the second hole 134 of the second lever 130 remains the same.

The pivot ratio changes depending on the first and second distances Y_{1,} Y₂ and thus the force/travel effect on the cable correspondingly changes. In other words, when the first pivot ratio is desired, the first hole 34 and the first opening 32 of the first lever 30 are spaced the first distance Y₁ which causes a first force/travel effect on the cable. Similarly, when the second pivot ratio is desired, the second hole 134 and the second opening 132 of the second lever 130 are spaced the second distance Y₂ which causes a second force/travel effect on the cable.

When the pin 46 is in the first position, the first lever 30 rotates in response to movement of the shifter 26, and thus the stud 28, about the eccentric portion 48, and more specifically, rotates about the central axis C in the first pivot ratio which applies the first force/travel effect on the cable. Likewise, when the pin 46 is in the second position, the second lever 130 rotates in response to movement of the shifter 26, and thus the stud 28, about the eccentric portion 48, and more specifically, rotates about the central axis C in the second pivot ratio which applies the second force/travel effect on the cable. Therefore, the pin 46 is utilized to interchangeably couple the first and second levers 30, 130, which have different pivot ratios, to the housing 12. Hence, the same pin 46 and the same housing 12 can be utilized with levers 30, 130 of different pivot ratios. Therefore, the shifter assembly 10 provides a kit to select the desired lever 30, 130 and orientate the eccentric portion 48, 148 in a desired position with a desired pivot ratio.

In addition, a method of assembling a shifter including the housing 12, the first lever 30, the second lever 130, the pin 46, the eccentric portion 48 attached to the pin 46 is disclosed. The method includes the steps of selecting one of the first lever 30 and the second lever 130, orientating the eccentric portion 48 to define a first pivot ratio for the first lever 30 and a second pivot ratio for the second lever 130, positioning the pin 46 in one of a first position corresponding to the eccentric portion 48 defining the first pivot ratio for the first lever 30 and a second position corresponding to the eccentric portion 48 defining the second pivot ratio for the second lever 130. The method also includes the step of inserting the pin 46 through the selected one of the first lever 30 and the second lever 130 to engage the eccentric portion 48 with the selected one of the levers 30, 130 to couple the selected one of the levers 30, 130 to the housing 12 in one of the first and second pivot ratios.

As discussed above, the first and second levers 30, 130 each include the first end 36, 136 and the second end 38, 138 spaced from each other and the first and second levers 30, 130 each define the hole 34, 134 disposed between the first 36, 136 and second 38, 138 ends, The method further includes the step of maintaining the relative position of the second end 38 and the hole 34 of the first lever 30 in the same orientation relative to the housing 12 as the relative position of the second end 138 and the hole 134 of the second lever 130 irrespective of the pin 46 being in the first and second positions. Many modifications and variations of the present invention are possible in light of the above teachings. The foregoing invention has been described in accordance with the relevant legal standards; thus, the description is exemplary rather than limiting in nature. Variations and modifications to the disclosed embodiment can become apparent to those skilled in the art and do come within the scope of the invention. Accordingly, the scope of legal protection afforded this invention can only be determined by studying the following claims.

## Claims

1. A shifter assembly (10) for a vehicle, said assembly (10) comprising:
a housing (12) defining an aperture (14) with said aperture (14) defining a pivot axis (P);
a lever (30) coupled to said housing (12) and defining an opening (32) with said opening (32) defining a central axis (C) spaced from said pivot axis (P);
a pin (46) selectively disposed in said aperture (14) of said housing (12) and said opening (32) of said lever (30) for coupling said lever (30) to said housing (12) with said pin (46) defining a pin axis (A); and
an eccentric portion (48) attached to said pin (46) and disposed in said opening (32) with said eccentric portion (48) defining an eccentric axis (E) coaxial with said central axis (C) and offset from said pin axis (A) to define a first pivot ratio for said lever (30).

2. An assembly (10) as set forth in claim 1 wherein said pin axis (A) and said pivot axis (P) are coaxial.

3. An assembly (10) as set forth in claim 1 or 2 wherein said pin (46) is rotatable about said pin axis (A) between a first position with said eccentric portion (48) engaging said opening (32) of said lever (30) to correspond to a first orientation of said lever (30) and a second position with said eccentric portion (48) engaging said opening (32) of said lever (30) to correspond to a second orientation of said lever (30) with said first and second positions being different from each other.

4. An assembly (10) as set forth in claim 1 or 2 wherein said lever (30) is further defined as a first lever (30) defining a first opening (32) for receiving said pin (46) in a first position with said eccentric portion (48) engaging said first opening (32) of said first lever (30) in a first orientation further defining said first pivot ratio and further including a second lever (130) defining a second opening (132) for receiving said pin (46) in a second position with said eccentric portion (48) engaging said second opening (132) of said second lever (130) in a second orientation defining a second pivot ratio with said first and second pivot ratios being different from each other for allowing said pin (46) to interchangeably couple one of said first and second levers (30, 130) to said housing (12).

5. An assembly (10) as set forth in claim 1 or 2 wherein said lever (30) includes a protrusion (40) disposed in said aperture (14) of said housing (12) and extending outwardly along said central axis (C) with said opening (32) extending through said protrusion (40).

6. An assembly (10) as set forth in claim 5 wherein said protrusion (40) includes a first distal end (42) and a second distal end (44) transverse to said central axis (C) with said central axis (C) of said opening (32) spaced one of a first distance (D₁) from said first distal end (42) and a second distance (D₂) from said first distal end (42) with said second distance (D₂) being greater than said first distance (D₁).

7. An assembly (10) as set forth in claim 6 wherein said lever (30) is further defined as a first lever (30) defining a first opening (32) spaced said first distance (D₁) from said first distal end (42) for receiving said pin (46) in a first position and further including a second lever (130) defining a second opening (132) spaced a second distance (D₂) from a first distal end (142) for receiving said pin (46) in a second position different from said first position such that said pin (46) interchangeably couples one of said first and second levers (30, 130) to said housing (12).

8. An assembly (10) as set forth in any one of claims 1, 2, 5, or 6 wherein said pin (46) includes a head (50) and a shaft (52) spaced from each other along said pin axis (A) with said eccentric portion (48) disposed between said head (50) and said shaft (52).

9. An assembly (10) as set forth in claim 8 wherein said pin (46) is rotatable about said pin axis (A) between a first position and a second position different from said first position and wherein said head (50) includes a tab (54) engaging said housing (12) for securing said pin (46) in one of said first and second positions.

10. An assembly (10) as set forth in claim 9 wherein said housing (12) defines a plurality of recesses (56) spaced from each other adjacent said aperture (14) with said tab (54) selectively engaging one of said recesses (56) for securing said pin (46) in one of said first and second positions.

11. An assembly (10) as set forth in any preceding claim wherein said lever (30) defines a hole (34) spaced from said opening (32) and wherein said housing (12) defines a slot (16) spaced from said aperture (14) with said slot (16) aligning with said hole (34) of said lever (30).

12. An assembly (10) as set forth in claim 11 further including a stud (28) extending through said slot (16) and disposed in said hole (34) of said lever (30) for moving said lever (30) between a first gear position and a second gear position different from said first gear position.

13. An assembly (10) as set forth in claim 12 further including a shifter (26) movably coupled to said housing (12) with said stud (28) coupled to said shifter (26) to concurrently move with said shifter (26) such that movement of said shifter (26) corresponds to movement of said lever (30) between said first and second gear positions.

14. An assembly (10) as set forth in any one of claim 1, 2, 5, 6, or 8 wherein said housing (12) includes a first wall (18) and a second wall (20) spaced from each other to define a channel (22) therebetween for receiving said lever (30) with said aperture (14) of said housing (12) further defined as a first aperture (14) and said first wall (18) further defining said first aperture (14) and said second wall (20) defining a second aperture (24) along said pivot axis (P) such that said first and second apertures (14, 24) align with each other and said pin (46) being disposed in said first and second apertures (14, 24) and engaging said second wall (20).

15. An assembly (10) as set forth in claim 14 wherein said pin (46) is rotatable about said pin axis (A) between a first position and a second position different from said first position and wherein said second wall (20) defines a plurality of recesses (56) spaced from each other adjacent said second aperture (24) with said pin (46) including a tab (54) selectively engaging one of said recesses (56) for securing said pin (46) in one of said first and second positions.

16. A method of assembling a shifter including a housing (12), a first lever (30), a second lever (130), a pin (46), an eccentric portion (48) attached to the pin (46), said method comprising the steps of:
selecting one of the first lever (30) and the second lever (130);
orientating the eccentric portion (48) to define a first pivot ratio for the first lever (30) and a second pivot ratio for the second lever (130);
positioning the pin (46) in one of a first position corresponding to the eccentric portion (48) defining the first pivot ratio for the first lever (30) and a second position corresponding to the eccentric portion (48) defining the second pivot ratio for the second lever (130); and
inserting the pin (46) through the selected one of the first lever (30) and the second lever (130) to engage the eccentric portion (48) with the selected one of the levers (30, 130) to couple the selected one of the levers (30, 130) to the housing (12) in one of the first and second pivot ratios.

17. A method as set forth in claim 16 wherein the first and second levers (30, 130) each include a first end (36, 136) and a second end (38, 138) spaced from each other and the first and second levers (30, 130) each define a hole (34, 134) disposed between the first (36, 136) and second (38, 138) ends and further including the step of maintaining the relative position of the second end (38) and the hole (34) of the first lever (30) in the same orientation relative to the housing (12) as the relative position of the second end (138) and the hole (134) of the second lever (130) irrespective of the pin (46) being in the first and second positions.
